# EUROPEAN PATENT SPECIFICATION

(11) **EP 4 516 088 B1**
(45) Date of publication and mention of the grant of the patent: **09.12.2026**
(21) Application number: 24185125.2
(22) Date of filing: 27.06.2024
(51) Int. Cl.: A01G 9/24, B01D 53/26, F24F 3/14

(54) **GREENHOUSE AIR HUMIDITY AND/OR TEMPERATURE CONTROL**
LUFTFEUCHTIGKEITS- UND/ODER TEMPERATURREGELUNG FÜR EIN GEWÄCHSHAUS
RÉGULATION DE L'HUMIDITÉ ET/OU DE LA TEMPÉRATURE DE L'AIR D'UNE SERRE

(30) Priority: 29.08.2023 FI 20237147
(43) Date of publication of application: 05.03.2025
(73) Proprietor: NW Systems Ab Oy, 65410 Sundom (FI)
(72) Inventor: Nordberg, Daniel, 65410 Sundom (FI)
(74) Representative: Kolster Oy Ab

(56) References cited:
- WO-A1-2017/062476
- JP-B2- 4 423 499
- US-A1- 2018 177 140
- US-A1- 2019 364 746

## Description

### FIELD

The invention relates to a method and an arrangement for control of humidity and/or temperature of a greenhouse.

### BACKGROUND

Removal of excess moisture from a greenhouse is important for prevention of damage such as growth of mold and fungus, prevention of diseases caused by spread of bacteria and viruses, and controlled evaporation of moisture from the leaf surfaces of the plants to optimize their growth.

Document WO 2017/062476 A1 describes a controlled and closed agricultural system having an enthalpy wheel and cooling coil. The cooling coil is positioned within a recirculating air duct, downstream of and in series with the enthalpy wheel. The cooling coil circulates a heat transfer fluid to remove additional heat from the recirculating air.

Document US 2019/0364746 A1 discloses a dehumidification system includes a desiccant, a primary heat exchanger, a secondary heat exchanger, three fans, and a burner. The first fan generates a carbon dioxide airflow through the primary heat exchanger and the secondary heat exchanger. The burner generates a flame into one end of the primary heat exchanger. The second fan generates an airflow that flows over the secondary heat exchanger, the primary heat exchanger and through a first portion of the desiccant. The third fan generates an air flow that flows through a second portion of the desiccant.

Further reference is made to the documents US 2018/177140 A1 and JP 4 423499 B2.

The prior art fails to provide an efficient way of removing moisture from the greenhouse air, especially in cold environmental conditions. It is thus evident that there is a need for an efficient method and arrangement for humidity and/or temperature control of a greenhouse.

### BRIEF DESCRIPTION

It is the objective of the invention to provide an effective method and arrangement for control of humidity and/or temperature of a greenhouse. This is achieved with the invention that is the scope of the independent claims. Preferred embodiments have been disclosed in the dependent claims.

The embodiments of the invention provide the significant advantage of efficient humidity and/or temperature control of a greenhouse.

The condensation step is performed before the adsorption step. In this way, significant advantages can be obtained in terms of humidity reduction performance and energy savings when compared to systems where the adsorption phase is carried out before the condensation phase.

The technical effect of the present invention, when first performing the condensation step, is that the outside air becomes far more suitable for the subsequent adsorption step. That is, in the initial condensation step, the outside air can be heated to a relatively high temperature and to a low humidity, which is optimal for the subsequent adsorption step thereby resulting into more efficient reduction of humidity while also saving significant amount of energy during the process. The advantages of the present invention are especially notable in low temperatures of the outside air, such as in the temperature range -10 C to +10 C but perform also better in other temperature ranges when compared to systems first performing an adsorption phase.

The important specific of the present invention is thus the behaviour of the outside air in the process. While first performing the condensation phase, the relative humidity of the outside air passing the first heat exchanger can be pressed very low, which provides excellent basis for a subsequent adsorption step and thus for the efficiency of the overall process.

### DRAWINGS

The invention and its preferred embodiments are shown in the accompanying drawings, where
Figure 1 shows an embodiment, not according to the invention, of a humidity and/or temperature control arrangement of a greenhouse;
Figure 2 shows a more detailed embodiment with respect to Figure 1;
Figure 3 shows another embodiment of the arrangement; and
Figure 4 shows an embodiment of a heat pump arrangement of the humidity and/or temperature control arrangement.

### DETAILED DESCRIPTION

The embodiments relate to humidity and/or temperature control of a greenhouse. For optimal growth of the plants and prevention of other problems such as growth of mold or bacteria, dehumidification of the greenhouse is necessary.

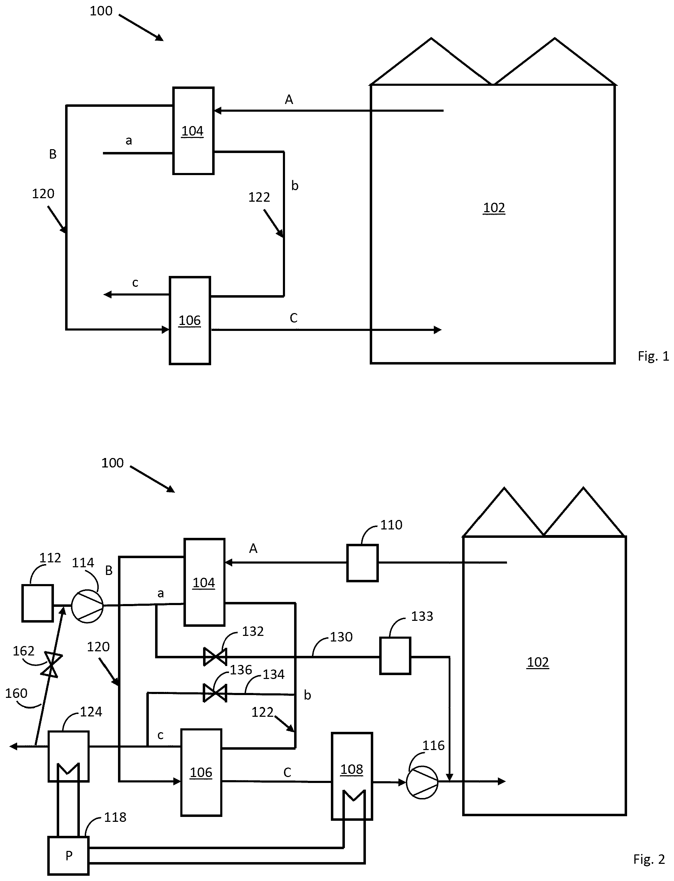

Figure 1 shows one embodiment of the dehumidification arrangement 100. There is provided a greenhouse 102, whose interior air is being subject to dehumidification. Figure 1 shows that a portion of the interior air of the greenhouse is led to and circulated in a greenhouse air flow path 120 such that the air exhausted from the greenhouse in stage "A" passes via a first heat exchanger 104 to a second heat exchanger in stage "B", and then 106 back to the greenhouse in stage "C". Figure 1 shows also a second air flow path 122 that is an ambient air flow part, where ambient air, being air originating exterior of the greenhouse, is first input to the first heat exchanger 104 in stage "a", and the output air from the first heat exchanger 104 is then input to the second heat exchanger in stage "b", and after passing the second heat exchanger 106, returned to the outside air in stage "c". The greenhouse air flow path and ambient air flow path are arranged to respective piping having inlets and outlets leading to and out of the piping. The ambient air flow thus takes place wholly outside of the greenhouse in the embodiment of Figure 1.

The arrangement has at least three operation modes, which will be discussed in detail later in connection with Figure 2. One of the operation modes is a dehumidification mode, and in the exemplary operation of the arrangement of Figure 1, the first heat exchanger 104 carries out heat exchanging between the warm interior air of flow path 120, and the colder outside air of the air flow path 122, whereby heat is transferred from the interior air to the exterior air. The heat exchanging causes condensation when the warm and cold air come into contact with each other. The condensation may take place in a condensation wheel or a fixed type of heat exchanger, for instance.

After the greenhouse air 120 has passed the first heat exchanger 104, it is led to the second heat exchanger 106 which is downstream of the first heat exchanger both in the greenhouse air flow path and the ambient air flow path. The first and second heat exchangers are thus fluidly connected by piping to each other both in the greenhouse and ambient air flow paths thus allowing the air to flow from the first heat exchanger to the second heat exchanger. The ambient air flow is arranged counter-currently to the greenhouse air flow both in the first heat exchanger and the second heat exchanger.

In the second heat exchanger 106, the greenhouse air is to be heated by the ambient air from the air flow 122. In the second heat exchanger, the heat exchanging takes place by adsorption and thus the second heat exchanger may be a sorption heat exchanger, such as a sorption wheel rotary heat exchanger. Generally, the sorption heat exchanger contains sorption material which has strong affinity for water vapour. The material is typically a desiccant, which is capable of attracting and holding onto water molecules. When the sorption heat exchanger is being used, and the desiccant has become loaded with water molecules, it will need to be regenerated by heating the desiccant material. This causes the water release from the material, which is then vented out from the sorption heat exchanger, which can be condensed back to water by cooling. The desiccant is then cooled for next cycle of water removal.

Specifically, in a rotary wheel sorption heat exchanger, there is provided a rotary wheel which has a matrix having a large surface area for interaction between the desiccant material and air passing through the heat exchanger. When the rotor has adsorbed water and is saturated, the rotor moves those sections to regeneration. In the regeneration, there is a separate process to separate the moisture from the desiccant, which can include passing warm or hot air through the rotor, which releases the moisture. Then the rotor may be cooled for the next cycle. Thus, in a rotary wheel sorption heat exchanger, the wheel rotates cyclically between the adsorption and regeneration zones.

Thus, in the embodiment of Figure 1, both heat exchangers 104 and 106 are for removing moisture from the greenhouse air flow path, the former by condensation and the latter by absorption. This provides the advantage of very efficient moisture removal in an energy efficient manner.

Specifically, by providing two types of heat exchangers, condensing and adsorption heat exchangers affecting the greenhouse air flow, operational range of the arrangement can be optimized. In environments, where the ambient conditions have big temperature and/or moisture variations due to day/night or summer/winter, two different types of the heat exchangers ensure energy efficient operation in all conditions. For example, the condensing heat exchanger works efficiently during winter time but during summer time a sorption heat exchanger has a better performance.

The arrangement may be operated differently during winter time and summer time. The winter and summer are here defined by an average outside temperature, which can be + 5 Celsius, for instance. Temperatures above + 5 C may be considered as summer and below + 5 C are considered as winter.

As a non-limiting winter time use case example, the parameters (temperature / relative humidity / water content) during winter time in various phases of the flow path 120 are (+18 Celcius (C) / 80 % RH / 10.3 g/kg) in phase A, (+2.6 C / 99 % RH / 4.5 g/kg) in phase B, and finally (9.9 C, 39 % RH and 3 g/kg) in stage C when heat exchanged with outside air of -3 C with relative humidity 85 %. It can thus be seen that the water content is effectively reduced in two stages, in both heat exchangers 104 and also 106. The initial water content 10.3 g/kg goes down to 4.5 g/kg in the heat exchanger 104 and then further down to 3 g/kg in the second heat exchanger 106.

In the above example, the parameters of the outside air in the stages a, b and c, respectively, are (-3 C) / 85 % RH / 2.3 g/kg) in stage a, (+12.4 C) / 26.5 % RH / 2.3 g/kg) in stage b, and (+5.1 C) / 71.9 % RH / 3.9 g/kg) in stage c. The water content in the outside air has thus been increased in the process.

Figure 2 shows another embodiment of the dehumidification arrangement 100 where the parts sharing the same numbers correspond to those in Figure 1. In addition to Figure 1, the embodiment of Figure 2 has filters 110, 112 to filter the interior air flow A and exterior flow "a", respectively. The filters are provided to remove any impurities from the air flows. The arrangement may also include a fan 114 to increase the volume of the exterior air flow, and/or a fan 116 to affect the flow rate back to the greenhouse 102.

In addition to devices shown in Figure 1, the embodiment of Figure 2 also comprises a third heat exchanger 108 to increase the temperature of the air being returned to the greenhouse. The heat exchanger may receive heat from a further heat source, such as a renewal energy heat source or similar. The arrangement comprises a fourth heat exchanger 124 to recover heat from stream "c". There may be provided a heat pump 118 which is operationally connected to the third and fourth heat exchangers. The heat pump may extract heat of the flow in the fourth heat exchanger 124 and circulates a fluid between the heat exchangers 108 and 124 to heat up the stream C in the third heat exchanger 108 to a temperature level suitable for the greenhouse, e.g. to 20 C degrees.

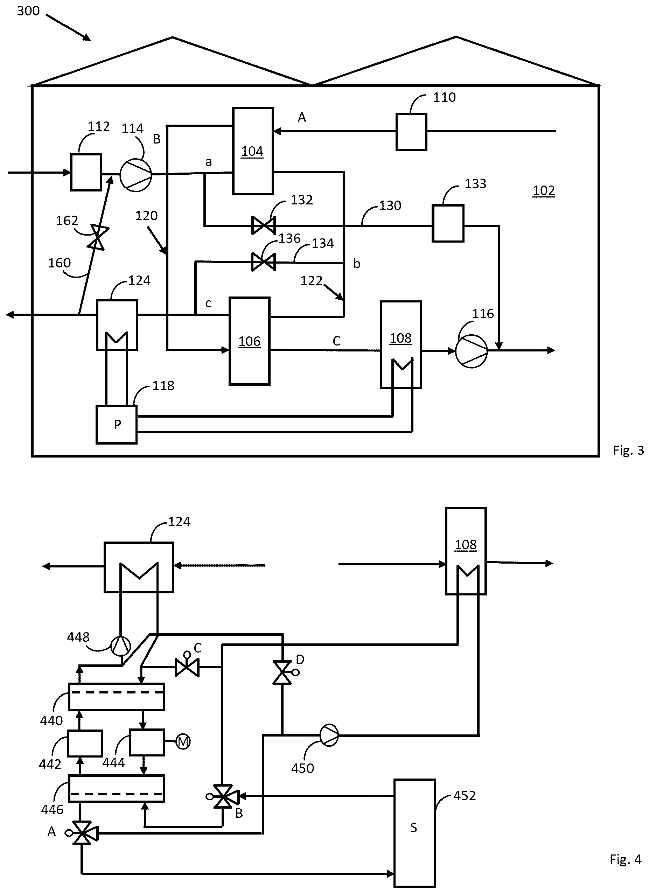

In an embodiment, the heat pump 118 is applied for harvesting heat from both third 108 and fourth heat exchangers 124 and store the heat in a heat storage, such as a water tank, for later usage. The arrangement of the heat pump is explained more in detail in connection with Figure 4.

The arrangement may also comprise a first auxiliary flow path 130 branching from the ambient air flow path 122 upstream of the first heat exchanger 104 and ending downstream of the second 106 or third heat exchanger 108 in the greenhouse air flow path 120. There is provided a valve 132 for controlling the flow volume in the flow path 130. The purpose of the first flow path is to allow a second operation mode "cooling or heat harvest" where the primary intention is, instead of dehumidification, cooling of the air flow, and also securing that the ingoing air to the greenhouse is not too humid. In this second operation mode, the second heat exchanger 106 is stopped or at least substantially stopped, and the ambient air is directed directly to the flow path downstream of the third heat exchanger 108, such as to the outlet of fan 116. In this operation mode the third and fourth heat exchangers 108 and 124 will be used for heat harvesting by the heat pump 118 such that they are arranged to cool the air flows passing through them. Figure 2 shows also a humidifier 133 arranged downstream of the valve to the first auxiliary flow path 130, which humidifier may be used to add moisture to the flow 130 e.g. during very dry summer days. The humidifier may comprise mist spray nozzles, for instance, for adding humidity to the air flow.

The arrangement may also comprise a second auxiliary flow path 134 starting upstream of the second heat exchanger 106 in the ambient flow path 122 and ending downstream of the second heat exchanger 106 in the ambient air flow path 122. The flow path 134 is thus arranged to circumvent the second heat exchanger 106. There is provided a valve 136 for controlling the flow volume in the flow path 134. The advantage and purpose with the flow path 134 is to alleviate the risk of freezing of and/or defrosting the fourth heat exchanger 124 during very cold winter periods by leading warmer air than what would be normally received from the second heat exchanger 106 in the ambient air flow.

The arrangement also comprises a third auxiliary flow path 160 starting downstream of the fourth heat exchanger 124 and ending upstream of the first heat exchanger 104 in the ambient air flow path. There is arranged a third valve 162 for controlling the air flow in the third flow path. The purpose of the flow path is to enable use of cold outlet air from the fourth heat exchanger 124 to further improve the dehumidification performance of the first heat exchanger by lowering the temperature in the incoming ambient air flow "a".

In some embodiments, e.g. in summer time, the third heat exchanger 108 can be applied in a cooling mode whereby it is also capable of removing moisture from the greenhouse air flow 120. In an exemplary case with 30 000 kg/h air flow, the first, second and third heat exchangers may be capable of removing 6 kg/h, 87 kg/h and 15 kg/h, respectively.

In a winter operation mode, when the ambient air is colder than in the summer, the first heat exchanger removes most of the water of the greenhouse air. In the same exemplary case as above with 30 000 kg/h greenhouse air circulation, and -3 C ambient air temperature, the first heat exchanger would remove 174 kg/h, and the second heat exchanger 47 kg/h water out of the greenhouse air.

There are three operational modes in the arrangement, which are further explained with reference to the following table, where it is explained how different devices are being operated in the various operation modes. In the below table, HE refers to the respective four heat exchangers 104, 106, 108 and 124, P to the heat pump 118, F1 and F2 to respective fans 116 and 114 and V1 and V2 to respective valves 132 and 136.

| Mode | HE1 | HE2 | HE3 | HE4 | P | F1 | F2 | V1 | V2 |
|---|---|---|---|---|---|---|---|---|---|
| Dehumidif. | On | On | Heat (W) | Cool | HE4->HE3 (W) | On | On | Cl | Df |
| | | | Cool (S) | | HE4+HE3 (S) | | | | |
| Cool/ Heat harvest | On | Off / slow | Cool | Cool | HE4+HE3 (S) to water storage | On | On | Cnt | Cl |
| Ventilation | Off | Off | Off | Off | Off | On | Off | Cl | Cl |

The first operation mode "Dehumidification", the principal operation mode, refers to dehumidification of the greenhouse, that is, removal of water from the greenhouse air. This operational mode may be triggered by the greenhouse humidity exceeding a predetermined threshold value. In this operation mode, the first and second heat exchangers 104 and 106 are operational (ON) but the third and heat exchanger may take different roles depending on the ambient conditions.

During winter time (W in the table) or when the greenhouse temperature drops too low, the third heat exchanger is applied for heating the return air to the greenhouse. In one embodiment, the heat pump 118 is arranged to convey heat energy from the fourth heat exchanger 124 to the third heat exchanger 108. In this mode, the first auxiliary flow path 130 is not needed and the first valve 132 is closed.

During summer time (S in the table), the temperature in the greenhouse may rise over a predetermined threshold value for the temperature, and cooling of the greenhouse air is needed. Then, the pump is arranged to collect heat from both third and fourth heat exchangers 108, 124, and store the excess energy to a heat storage 452, such as a water tank shown in Figure 4, for instance.

In one use case of the dehumidification mode, during winter time if the fourth heat exchanger 124 is in risk of freezing, the second auxiliary flow path 134 may be opened by the valve 136, whereby the warmer air effectively defrosts (Df in the table) the heat exchanger 124.

In the second operation mode "Cooling / Heat harvest", the second heat exchanger is substantially non-operational meaning that it is either fully stopped or operates with very low intensity (e.g. less than 20%) of the nominal power. The third and fourth heat exchangers are operated in cooling mode where the pump harvest heat energy to a water storage. The first valve 132 is controlled (Cnt in the table) such that the first auxiliary flow path 130 may supply air directly to the input flow to the greenhouse.

In the third operation mode "Ventilation", the goal is to keep air movement ongoing in the greenhouse, which is good for the crop development. This mode is applicable when the temperature and humidity are on appropriate level but air circulation is still beneficial. In this mode all the heat exchangers and pump are off and valves are closed (Cl in the table) and only the first fan 116 is in operation.

Figure 3 shows another embodiment of the arrangement 300. The arrangement is very similar to the arrangement of Figure 2, the only difference being that the greenhouse air flow and the respective equipment are arranged within the greenhouse. Also the ambient air flow path 122 is, to great extent, arranged within the greenhouse 300. In the embodiment shown, only the inlet and outlet of the ambient air flow are being connected to the ambient air but all devices, such as filters, valves, heat exchangers and pumps and heat pumps are within the greenhouse. Some hybrid solutions between the extremes of Figures 1 and 3 are possible where some equipment is within and some outside the greenhouse.

Figure 4 illustrates one embodiment of the heat pump structure the way of implementing the various operation modes, such as condensing and heat harvesting.

There are shown the third and fourth heat exchangers 108 and 124 respectively as in the other figures. There is provided a usual heat pump loop for circulating a refrigerant. The loop comprises an evaporator 440, compressor 444 run by a motor M, a condenser 446 and an expander 442. The dashed lines in the evaporator 440 and the condenser illustrate heat exchange relations between the refrigerant and ambient fluid flows. There is provided a pump 448, which circulates a fluid in the fourth heat exchanger 124 for collecting heat energy thereof and consequently evaporating the refrigerant in the evaporator 440. The flow, which may be water, is thus cooled in the evaporator before taking a new round in the fourth heat exchanger 124.

To the condenser 446, a cold fluid flow, which may also be water, may be directed for causing condensation when the cold fluid flow and by the compressor 444 heated gaseous refrigerant flow meet. The water flow receives thus energy in the condenser and is thereby heated.

Figure 4 shows also valves A, B, C and D, a flow pump 450 and heat storage 452, which may be a water tank, for instance.

In the dehumidification operation mode where the greenhouse air flow has been condensed and thus cooled in two heat exchangers 104, 106, there may be a need to warm the greenhouse air flow in the third heat exchanger before returning the flow into the greenhouse. In this mode, the valves C and D are closed and the three-way valves A and B are in such a position that they allow circulation to and from the third heat exchanger 108 but the connections to the external heat storage are closed. For collecting energy, the heat pump thus circulates the fluid in the fourth heat exchanger 124 where the flow is heated, which energy is used in the evaporator 440 for heating the refrigerant. For releasing energy, the heat pump gives energy to the fluid flow in the condenser 446, which heat energy is then provided to the third heat exchanger 108 to heat the greenhouse air flow.

In the cooling and heat harvesting mode, the heat pump is arranged to collect energy from both heat exchangers 108 and 124. In this operation mode the valves C and D are opened. By opening valve D, the cold fluid exiting the evaporator 440 is partly led also the third heat exchanger 108 in addition to be partly led to the fourth heat exchanger as in the other mode. By opening valve C, the flow heated in the third heat exchanger is utilized in the evaporator 440 in addition to the flow received from the fourth heat exchanger. So in practice, in this operation mode, the flows that circulate in the third and fourth heat exchangers are combined when entering and exiting the evaporator.

Furthermore, in this operation mode, the external flow to the condenser is coming from the external heating system, such as an external heat storage 452. Thus, the flow from the heat storage will be heated in the condenser by utilizing energy received from the third and fourth heat exchangers 108, 124.

The arrangement may also comprise additional measurement devices and control logic for implementation of the embodiments. The measurement devices may comprise one or more temperature and/or humidity measurement devices in various places of the arrangement. The control logic, which may be implemented by software, may receive input signals from the measurement devices and perform control actions based on the measurement results as disclosed in the connection of the drawings. Such control actions may include actions such as opening/closing valves, control of the fans and operation of the heat pump related actions.

In an aspect, there is provided a method of dehumidification of greenhouse air wherein circulating greenhouse air in a greenhouse air flow. In the greenhouse air flow, there is provided a step of heat exchanging the greenhouse air against an ambient air flow in a first heat exchanger and also the step of heat exchanging the greenhouse air flow against an ambient air flow in a second heat exchanger wherein the greenhouse air flow and ambient air flow are received from the first heat exchanger.

It is clear that when the technology develops the inventive idea can be implemented in various ways. The invention and its embodiments are thus not limited to disclosed embodiments but can vary within the appended claims.

## Claims

1. A control arrangement for controlling the temperature and/or humidity conditions of a greenhouse, wherein the arrangement comprises a greenhouse air flow (120) for circulating greenhouse air, and an ambient air flow (122) for circulating air originating exterior to the greenhouse, the arrangement comprising a first heat exchanger (104) for heat exchanging between the greenhouse air flow and the ambient air flow, the first heat exchanger being configured to remove moisture from the greenhouse air flow (120) by condensation, the arrangement further comprises a second heat exchanger (106) fluidly connected in series with the first heat exchanger (104) downstream of the first heat exchanger in the greenhouse air flow, the second heat exchanger (106) being further fluidly connected to the ambient air flow (122) downstream of the first heat exchanger (104), wherein the second heat exchanger is provided for performing heat exchanging between the greenhouse air flow and the ambient air flow, the second heat exchanger being configured to remove moisture from the greenhouse air flow by adsorption, **characterized in that** the arrangement comprises a fourth heat exchanger (124) for extracting heat energy from the ambient air flow downstream of the second heat exchanger (106), and **in that** the arrangement comprises a third auxiliary flow path (160) whose start point is arranged downstream of the fourth heat exchanger (124) in the ambient air flow path (122), and end point is arranged upstream of the first heat exchanger in the ambient air flow path, and the arrangement comprises a valve (162) for controlling the flow volume in the third auxiliary flow path (160).

2. A control arrangement for controlling the temperature and/or humidity conditions of a greenhouse according to claim 1, **character**i z e d in that the arrangement comprises a third heat exchanger (108) downstream of the second heat exchanger (106), the third heat exchanger being configured to heat the greenhouse air before the air exiting the greenhouse air flow and being returned to the greenhouse interior air.

3. A control arrangement for controlling the temperature and/or humidity conditions of a greenhouse according to any preceding claim, **characterized in that** the arrangement comprises a heat pump (118) operationally connected to the third (108) and fourth (124) heat exchangers.

4. A control arrangement for controlling the temperature and/or humidity conditions of a greenhouse according to any preceding claim, **characterized in that** the arrangement comprises a first auxiliary flow path (130) whose start point is arranged upstream of the first heat exchanger (104) in the ambient air flow path (122), and end point of the first auxiliary flow path is arranged downstream of the third heat exchanger in the greenhouse air flow path, and the arrangement comprises a valve (132) for controlling the flow volume in the first auxiliary flow path.

5. A control arrangement for controlling the temperature and/or humidity conditions of a greenhouse according to any preceding claim, **characterized in that** the arrangement comprises a second auxiliary flow path (134) whose start point is arranged upstream of the second heat exchanger (104) in the ambient air flow path (122), and end point is arranged downstream of the second heat exchanger in the ambient air flow path, and the arrangement comprises a valve (136) for controlling the flow volume in the second auxiliary flow path (134).

6. A control arrangement for controlling the temperature and/or humidity conditions of a greenhouse according to any preceding claim, **characterized in that** the arrangement comprising a dehumidification operation mode, in which dehumidification operation mode the first and second heat exchangers are operational in performing the respective heat exchanging and thus removing moisture from the greenhouse air.

7. A control arrangement for controlling the temperature and/or humidity conditions of a greenhouse according to any preceding claim, **characterized in that** in the dehumidification operation mode, when the ambient temperature is below a predetermined temperature threshold thus being representative of a winter time, the heat pump (118) is configured to convey heat energy from the fourth heat exchanger (124) to the third heat exchanger (108) for warming the greenhouse air flow before returning to the greenhouse.

8. A control arrangement for controlling the temperature and/or humidity conditions of a greenhouse according to claim 7, **characterized in that** in the dehumidification operation mode, when the ambient temperature is below a predetermined temperature threshold thus being representative of a winter time, the arrangement is configured to cyclically control the second valve (136) to open to allow air flow in the second auxiliary flow path in order to defrost the fourth heat exchanger (124).

9. A control arrangement for controlling the temperature and/or humidity conditions of a greenhouse according to any preceding claim, **characterized in that** in the dehumidification operation mode, when the ambient temperature is over a predetermined temperature threshold thus being representative of a summer time, the heat pump (118) is configured to harvest heat energy from the third heat exchanger (108) and the fourth heat exchanger (124) thereby cooling the greenhouse air flow path, and the heat pump is configured to store the excess energy to an energy storage (452).

10. A control arrangement for controlling the temperature and/or humidity conditions of a greenhouse according to any preceding claim, **character** - **ized** in that the arrangement comprises a cooling and heat harvesting operation mode, the second heat exchanger (106) is either stopped or operated at less than 20 % power from the nominal power, and the heat pump (118) is configured to harvest heat energy from the third heat exchanger (108) and the fourth heat exchanger (124) thereby cooling the greenhouse air flow path, and the heat pump is configured to store the excess energy to an energy storage (452).

11. A control arrangement for controlling the temperature and/or humidity conditions of a greenhouse according to claim 10, **characterized in that** the arrangement is configured to control the first valve (132) to control and allow air flow via the first auxiliary flow path (130).

12. A control arrangement for controlling the temperature and/or humidity conditions of a greenhouse according to any preceding claim, **character** - **ized** in that the arrangement comprises a ventilation operation mode, wherein the only operational device is a fan (116) arranged downstream of the third heat exchanger in the greenhouse air flow path.

13. A method of dehumidification of greenhouse air wherein circulating greenhouse air in a greenhouse air flow path, wherein in the greenhouse air flow path (120):
heat exchanging, the greenhouse air against an ambient air flow (122) in a first heat exchanger (104) wherein the first heat exchanger removes moisture from the greenhouse air flow by condensing;
heat exchanging the greenhouse air flow (120) against an ambient air flow (122) in a second heat exchanger (106) wherein the greenhouse air flow and ambient air flow are received from the first heat exchanger wherein the second heat exchanger removes moisture from the greenhouse air flow by adsorption; and
returning the greenhouse air flow to the greenhouse, c**haracter** - **ized** by extracting heat energy from the ambient air flow in a fourth heat exchanger (124) downstream of the second heat exchanger (106), and in that controlling the flow volume in a third auxiliary flow path (160) with a valve (162) wherein the start point of the third auxiliary flow path (160) is arranged downstream of the fourth heat exchanger (124) in the ambient air flow path (122) and end point is arranged upstream of the first heat exchanger in the ambient air flow path.

## Patentansprüche

1. Regelungsanordnung zum Steuern der Temperatur- und/oder Luftfeuchtigkeitsbedingungen eines Gewächshauses, wobei die Anordnung einen Gewächshausluftstrom (120) zum Zirkulieren von Gewächshausluft und einen Umgebungsluftstrom (122) zum Zirkulieren von Luft, die von außerhalb des Gewächshauses stammt, umfasst, wobei die Anordnung einen ersten Wärmetauscher (104) zum Wärmeaustausch zwischen dem Gewächshausluftstrom und dem Umgebungsluftstrom umfasst, wobei der erste Wärmetauscher ausgebildet ist, dem Gewächshausluftstrom (120) durch Kondensation Feuchtigkeit zu entziehen, wobei die Anordnung weiter einen zweiten Wärmetauscher (106) umfasst, der stromabwärts des ersten Wärmetauschers im Gewächshausluftstrom in Reihe mit dem ersten Wärmetauscher (104) fluidisch verbunden ist, wobei der zweite Wärmetauscher (106) weiter stromabwärts des ersten Wärmetauschers (104) fluidisch mit dem Umgebungsluftstrom (122) verbunden ist, wobei der zweite Wärmetauscher zum Durchführen von Wärmeaustausch zwischen dem Gewächshausluftstrom und dem Umgebungsluftstrom bereitgestellt ist, wobei der zweite Wärmetauscher ausgebildet ist, dem Gewächshausluftstrom durch Adsorption Feuchtigkeit zu entziehen, **dadurch gekennzeichnet, dass** die Anordnung einen vierten Wärmetauscher (124) zum Gewinnen von Wärmeenergie aus dem Umgebungsluftstrom stromabwärts des zweiten Wärmetauschers (106) umfasst und dass die Anordnung einen dritten Hilfsströmungsweg (160) umfasst, dessen Startpunkt stromabwärts des vierten Wärmetauschers (124) in dem Umgebungsluftströmungsweg (122) angeordnet ist und dessen Endpunkt stromaufwärts des ersten Wärmetauschers in dem Umgebungsluftströmungsweg angeordnet ist, und die Anordnung ein Ventil (162) zum Steuern des Volumenstroms in dem dritten Hilfsströmungsweg (160) umfasst.

2. Regelungsanordnung zum Steuern der Temperatur- und/oder Luftfeuchtigkeitsbedingungen eines Gewächshauses nach Anspruch 1, **dadurch gekennzeichnet, dass** die Anordnung einen dritten Wärmetauscher (108) stromabwärts des zweiten Wärmetauschers (106) umfasst, wobei der dritte Wärmetauscher ausgebildet ist, die Gewächshausluft zu erwärmen, bevor die Luft den Gewächshausluftstrom verlässt und zu der Luft im Innenraum des Gewächshauses zurückgeführt wird.

3. Regelungsanordnung zum Steuern der Temperatur- und/oder Luftfeuchtigkeitsbedingungen eines Gewächshauses nach einem vorstehenden Anspruch, **dadurch gekennzeichnet, dass** die Anordnung eine Wärmepumpe (118) umfasst, die mit dem dritten (108) und vierten (124) Wärmetauscher betriebsmäßig verbunden ist.

4. Regelungsanordnung zum Steuern der Temperatur- und/oder Luftfeuchtigkeitsbedingungen eines Gewächshauses nach einem vorstehenden Anspruch, **dadurch gekennzeichnet, dass** die Anordnung einen ersten Hilfsströmungsweg (130) umfasst, dessen Startpunkt stromaufwärts des ersten Wärmetauschers (104) in dem Umgebungsluftströmungsweg (122) angeordnet ist und dessen Endpunkt des ersten Hilfsströmungswegs stromabwärts des dritten Wärmetauschers in dem Gewächshausluftströmungsweg angeordnet ist, und die Anordnung ein Ventil (132) zum Steuern des Volumenstroms in dem ersten Hilfsströmungsweg umfasst.

5. Regelungsanordnung zum Steuern der Temperatur- und/oder Luftfeuchtigkeitsbedingungen eines Gewächshauses nach einem vorstehenden Anspruch, **dadurch gekennzeichnet, dass** die Anordnung einen zweiten Hilfsströmungsweg (134) umfasst, dessen Startpunkt stromaufwärts des zweiten Wärmetauschers (104) in dem Umgebungsluftströmungsweg (122) angeordnet ist und dessen Endpunkt stromabwärts des zweiten Wärmetauschers in dem Umgebungsluftströmungsweg angeordnet ist, und die Anordnung ein Ventil (136) zum Steuern des Volumenstroms in dem zweiten Hilfsströmungsweg (134) umfasst.

6. Regelungsanordnung zum Steuern der Temperatur- und/oder Luftfeuchtigkeitsbedingungen eines Gewächshauses nach einem vorstehenden Anspruch, **dadurch gekennzeichnet, dass** die Anordnung einen Entfeuchtungsbetriebsmodus umfasst, wobei in dem Entfeuchtungsbetriebsmodus der erste und der zweite Wärmetauscher beim Durchführen des jeweiligen Wärmeaustauschs in Betrieb sind und dadurch der Gewächshausluft Feuchtigkeit entziehen.

7. Regelungsanordnung zum Steuern der Temperatur- und/oder Luftfeuchtigkeitsbedingungen eines Gewächshauses nach einem vorstehenden Anspruch, **dadurch gekennzeichnet, dass** in dem Entfeuchtungsbetriebsmodus, wenn die Umgebungstemperatur unter einem vorbestimmten Temperaturschwellenwert liegt und somit einen Winter repräsentiert, die Wärmepumpe (118) ausgebildet ist, Wärmeenergie von dem vierten Wärmetauscher (124) zu dem dritten Wärmetauscher (108) zu fördern, um den Gewächshausluftstrom vor der Rückführung zu dem Gewächshaus zu erwärmen.

8. Regelungsanordnung zum Steuern der Temperatur- und/oder Luftfeuchtigkeitsbedingungen eines Gewächshauses nach Anspruch 7, **dadurch gekennzeichnet, dass** in dem Entfeuchtungsbetriebsmodus, wenn die Umgebungstemperatur unter einem vorbestimmten Temperaturschwellenwert liegt und somit einen Winter repräsentiert, die Anordnung ausgebildet ist, das zweite Ventil (136) zyklisch zum Öffnen zu steuern, um einen Luftstrom in dem zweiten Hilfsströmungsweg zu ermöglichen, um den vierten Wärmetauscher (124) abzutauen.

9. Regelungsanordnung zum Steuern der Temperatur- und/oder Luftfeuchtigkeitsbedingungen eines Gewächshauses nach einem vorstehenden Anspruch, **dadurch gekennzeichnet, dass** in dem Entfeuchtungsbetriebsmodus, wenn die Umgebungstemperatur über einem vorbestimmten Temperaturschwellenwert liegt und somit einen Sommer repräsentiert, die Wärmepumpe (118) ausgebildet ist, Wärmeenergie von dem dritten Wärmetauscher (108) und dem vierten Wärmetauscher (124) zu gewinnen und dadurch den Gewächshausluftströmungsweg zu kühlen, und die Wärmepumpe ausgebildet ist, die Überschussenergie in einem Energiespeicher (452) zu speichern.

10. Regelungsanordnung zum Steuern der Temperatur- und/oder Luftfeuchtigkeitsbedingungen eines Gewächshauses nach einem vorstehenden Anspruch, **dadurch gekennzeichnet, dass** die Anordnung einen Kühl- und Wärmegewinnungsbetriebsmodus umfasst, der zweite Wärmetauscher (106) entweder gestoppt wird oder mit weniger als 20 % Leistung der Nennleistung betrieben wird und die Wärmepumpe (118) ausgebildet ist, Wärmeenergie von dem dritten Wärmetauscher (108) und dem vierten Wärmetauscher (124) zu gewinnen und dadurch den Gewächshausluftströmungsweg zu kühlen, und die Wärmepumpe ausgebildet ist, die Überschussenergie in einem Energiespeicher (452) zu speichern.

11. Regelungsanordnung zum Steuern der Temperatur- und/oder Luftfeuchtigkeitsbedingungen eines Gewächshauses nach Anspruch 10, **dadurch gekennzeichnet, dass** die Anordnung ausgebildet ist, das erste Ventil (132) zu steuern, um einen Luftstrom über den ersten Hilfsströmungsweg (130) zu steuern und zu ermöglichen.

12. Regelungsanordnung zum Steuern der Temperatur- und/oder Luftfeuchtigkeitsbedingungen eines Gewächshauses nach einem vorstehenden Anspruch, **dadurch gekennzeichnet, dass** die Anordnung einen Lüftungsbetriebsmodus umfasst, wobei die einzige in Betrieb befindliche Vorrichtung ein Ventilator (116) ist, der stromabwärts des dritten Wärmetauschers in dem Gewächshausluftströmungsweg angeordnet ist.

13. Verfahren zum Entfeuchten von Gewächshausluft, wobei Gewächshausluft in einem Gewächshausluftströmungsweg zirkuliert wird, wobei in dem Gewächshausluftströmungsweg (120):
Wärmeaustausch der Gewächshausluft gegen einen Umgebungsluftstrom (122) in einem ersten Wärmetauscher (104), wobei der erste Wärmetauscher dem Gewächshausluftstrom durch Kondensation Feuchtigkeit entzieht;
Wärmeaustausch des Gewächshausluftstroms (120) gegen einen Umgebungsluftstrom (122) in einem zweiten Wärmetauscher (106), wobei der Gewächshausluftstrom und der Umgebungsluftstrom von dem ersten Wärmetauscher empfangen werden, wobei der zweite Wärmetauscher dem Gewächshausluftstrom durch Adsorption Feuchtigkeit entzieht; und
Rückführen des Gewächshausluftstroms zu dem Gewächshaus, **gekennzeichnet durch**
Gewinnen von Wärmeenergie aus dem Umgebungsluftstrom in einem vierten Wärmetauscher (124) stromabwärts des zweiten Wärmetauschers (106), und **dadurch**, dass
der Volumenstrom in einem dritten Hilfsströmungsweg (160) mit einem Ventil (162) gesteuert wird, wobei der Startpunkt des dritten Hilfsströmungswegs (160) stromabwärts des vierten Wärmetauschers (124) in dem Umgebungsluftströmungsweg (122) angeordnet ist und der Endpunkt stromaufwärts des ersten Wärmetauschers in dem Umgebungsluftströmungsweg angeordnet ist.

## Revendications

1. Agencement de régulation pour réguler les conditions de température et/ou d'humidité d'une serre, dans lequel l'agencement comprend un flux d'air (120) de la serre pour une circulation de l'air de la serre, et un flux d'air ambiant (122) pour une circulation de l'air provenant de l'extérieur de la serre, l'agencement comprenant un premier échangeur de chaleur (104) pour un échange de chaleur entre le flux d'air de la serre et le flux d'air ambiant, le premier échangeur de chaleur étant configuré pour éliminer l'humidité du flux d'air (120) de la serre par condensation, et l'agencement comprend en outre un deuxième échangeur de chaleur (106), en communication fluidique avec le premier échangeur de chaleur (104), disposé en série en aval du premier échangeur de chaleur dans le flux d'air de la serre, le deuxième échangeur de chaleur (106) étant en outre relié en communication fluidique avec le flux d'air ambiant (122) en aval du premier échangeur de chaleur (104), dans lequel le deuxième échangeur de chaleur est prévu pour effectuer un échange de chaleur entre le flux d'air de la serre et le flux d'air ambiant, le deuxième échangeur de chaleur étant configuré pour éliminer l'humidité du flux d'air de la serre par adsorption, **caractérisé en ce que** l'agencement comprend un quatrième échangeur de chaleur (124) pour extraire de l'énergie thermique du flux d'air ambiant en aval du deuxième échangeur de chaleur (106), et **en ce que** l'agencement comprend un troisième chemin d'écoulement auxiliaire (160) dont le point de départ est aménagé en aval du quatrième échangeur de chaleur (124) dans le chemin d'écoulement de l'air ambiant (122), et le point d'extrémité est aménagé en amont du premier échangeur de chaleur dans le chemin d'écoulement de l'air ambiant, et l'agencement comprend une vanne (162) pour réguler le débit dans le troisième chemin d'écoulement auxiliaire (160).

2. Agencement de régulation pour réguler les conditions de température et/ou d'humidité d'une serre, selon la revendication 1, **caractérisé en ce que** l'agencement comprend un troisième échangeur de chaleur (108) en aval du deuxième échangeur de chaleur (106), ledit troisième échangeur de chaleur étant configuré pour chauffer l'air de la serre avant que l'air ne quitte le flux d'air de la serre et qu'il soit renvoyé à l'intérieur de la serre.

3. Agencement de régulation pour réguler les conditions de température et/ou d'humidité d'une serre, selon l'une quelconque des revendications précédentes, **caractérisé en ce que** l'agencement comprend une pompe à chaleur (118) reliée fonctionnellement aux troisième (108) et quatrième (124) échangeurs de chaleur.

4. Agencement de régulation pour réguler les conditions de température et/ou d'humidité d'une serre, selon l'une quelconque des revendications précédentes, **caractérisé en ce que** l'agencement comprend un premier chemin d'écoulement auxiliaire (130) dont le point de départ est situé en amont du premier échangeur de chaleur (104) dans le chemin d'écoulement de l'air ambiant (122), et le point d'extrémité du premier chemin d'écoulement auxiliaire est situé en aval du troisième échangeur de chaleur dans le chemin d'écoulement de l'air de la serre, et l'agencement comprend une vanne (132) pour réguler le débit dans le premier chemin d'écoulement auxiliaire.

5. Agencement de régulation pour réguler les conditions de température et/ou d'humidité d'une serre, selon l'une quelconque des revendications précédentes, **caractérisé en ce que** l'agencement comprend un deuxième chemin d'écoulement auxiliaire (134) dont le point de départ est situé en amont du deuxième échangeur de chaleur (104) dans le chemin d'écoulement de l'air ambiant (122), et le point d'extrémité est situé en aval du deuxième échangeur de chaleur dans le chemin d'écoulement de l'air ambiant, et l'agencement comprend une vanne (136) pour réguler le débit dans le deuxième chemin d'écoulement auxiliaire (134).

6. Agencement de régulation pour réguler les conditions de température et/ou d'humidité d'une serre, selon l'une quelconque des revendications précédentes, **caractérisé en ce que** l'agencement comprend un mode de fonctionnement de déshumidification ; dans ce mode de fonctionnement de déshumidification, les premier et deuxième échangeurs de chaleur ont pour fonction d'effectuer les échanges de chaleur respectifs et, ce faisant, d'éliminer l'humidité de l'air de la serre.

7. Agencement de régulation pour réguler les conditions de température et/ou d'humidité d'une serre, selon l'une quelconque des revendications précédentes, **caractérisé en ce que** dans le mode de fonctionnement de déshumidification, lorsque la température ambiante est inférieure à un seuil de température prédéterminé, représentant ainsi une période hivernale, la pompe à chaleur (118) est configurée pour transférer de l'énergie thermique du quatrième échangeur de chaleur (124) au troisième échangeur de chaleur (108) afin de réchauffer le flux d'air de la serre avant qu'il retourne à la serre.

8. Agencement de régulation pour réguler les conditions de température et/ou d'humidité d'une serre, selon la revendication 7, **caractérisé en ce que**, dans le mode de fonctionnement de déshumidification, lorsque la température ambiante est inférieure à un seuil de température prédéterminé, représentant ainsi une période hivernale, l'agencement est configuré pour commander cycliquement la deuxième vanne (136) de sorte qu'elle s'ouvre pour permettre un flux d'air dans le deuxième chemin d'écoulement auxiliaire afin de dégivrer le quatrième échangeur de chaleur (124).

9. Agencement de régulation pour réguler les conditions de température et/ou d'humidité d'une serre, selon l'une quelconque des revendications précédentes, **caractérisé en ce que**, dans le mode de fonctionnement de déshumidification, lorsque la température ambiante est supérieure à un seuil de température prédéterminé, représentant ainsi une période estivale, la pompe à chaleur (118) est configurée pour récupérer de l'énergie thermique depuis le troisième échangeur de chaleur (108) et le quatrième échangeur de chaleur (124), refroidissant ainsi le chemin d'écoulement de l'air de la serre, et la pompe à chaleur est configurée pour stocker l'énergie excédentaire dans un dispositif de stockage d'énergie (452).

10. Agencement de régulation pour réguler les conditions de température et/ou d'humidité d'une serre, selon l'une quelconque des revendications précédentes, **caractérisé en ce que** l'agencement comprend un mode de fonctionnement de refroidissement et de récupération de chaleur, le deuxième échangeur de chaleur (106) étant soit arrêté, soit mis en fonctionnement à moins de 20 % de la puissance nominale, et la pompe à chaleur (118) est configurée pour récupérer de l'énergie thermique depuis le troisième échangeur de chaleur (108) et le quatrième échangeur de chaleur (124), refroidissant ainsi le chemin d'écoulement de l'air de la serre, et la pompe à chaleur est configurée pour stocker l'énergie excédentaire dans un dispositif de stockage d'énergie (452).

11. Agencement de régulation pour réguler les conditions de température et/ou d'humidité d'une serre, selon la revendication 10, **caractérisé en ce que** l'agencement est configuré pour commander la première vanne (132) de manière à réguler et à permettre un flux d'air via le premier chemin d'écoulement auxiliaire (130).

12. Agencement de régulation pour réguler les conditions de température et/ou d'humidité d'une serre, selon l'une quelconque des revendications précédentes, **caractérisé en ce que** l'agencement comprend un mode de fonctionnement de ventilation, dans lequel le seul dispositif opérationnel est un ventilateur (116) agencé en aval du troisième échangeur de chaleur dans le chemin d'écoulement de l'air de la serre.

13. Procédé de déshumidification de l'air d'une serre, dans lequel le fait de faire circuler l'air de la serre dans un chemin d'écoulement de l'air de la serre ; dans lequel dans le chemin d'écoulement de l'air (120) de la serre :
le fait d'effectuer un échange de chaleur de l'air de la serre contre un flux d'air ambiant (122) dans un premier échangeur de chaleur (104), dans lequel le premier échangeur de chaleur élimine l'humidité du flux d'air de la serre par condensation ;
le fait d'effectuer un échange de chaleur du flux d'air (120) de la serre contre un flux d'air ambiant (122) dans un deuxième échangeur de chaleur (106), dans lequel le flux d'air de la serre et le flux d'air ambiant sont reçus en provenance du premier échangeur de chaleur, dans lequel le deuxième échangeur de chaleur élimine l'humidité du flux d'air de la serre par adsorption ; et
le fait de renvoyer le flux d'air de la serre jusque dans la serre, **caractérisé par**
le fait d'extraire de l'énergie thermique du flux d'air ambiant dans un quatrième échangeur de chaleur (124) en aval du deuxième échangeur de chaleur (106), et par
le fait de réguler le débit dans un troisième chemin d'écoulement auxiliaire (160) avec une vanne (162), dans lequel le point de départ du troisième chemin d'écoulement auxiliaire (160) est aménagé en aval du quatrième échangeur de chaleur (124) dans le chemin (122) d'écoulement de l'air ambiant et le point d'extrémité est aménagé en amont du premier échangeur de chaleur dans le chemin d'écoulement de l'air ambiant.
